# EUROPEAN PATENT SPECIFICATION

(11) **EP 2 104 187 B1**
(45) Date of publication and mention of the grant of the patent: **27.06.2012**
(21) Application number: 07866369.7
(22) Date of filing: 19.12.2007
(51) Int. Cl.: H01R 13/62, H01R 13/502, H01R 4/22, H01R 4/30, H02G 15/115, H02G 15/117, H01R 4/36, H01R 9/03, H01R 13/52, H01R 13/523

(54) **PREINSULATED JOINT**
VORISOLIERTES ANSCHLUSSSTÜCK
RACCORD PRE-ISOLE

(30) Priority: 08.01.2007 ES 200700052
(43) Date of publication of application: 23.09.2009
(73) Proprietor: Ridelin, S.L., 08240 Manresa (Barcelona) (ES)
(72) Inventor: CAPELLES DE LA FUENTE, Rosa, E-08240 MANRESA (Barcelona) (ES)
(74) Representative: Morgades y Manonelles, Juan Antonio
(86) International application number: PCT/ES2007/000739
(87) International publication number: WO 2008/084120

(56) References cited:
- EP-A2- 0 171 349
- WO-A1-01/95437
- DE-C1- 10 026 091
- US-A- 2 867 680
- US-A- 5 760 332
- US-A1- 2003 127 242
- US-B1- 6 220 893

## Description

### OBJECT OF THE INVENTION

The present invention has as its object a preinsulated joint.

### FIELD OF THE INVENTION

The preinsulated joint being the object of the present invention is applicable in the electric connections with multipolar cables.

### BACKGROUND OF THE INVENTION

The joints existing so far have different drawbacks being specially related to their installation and sealing means, the joints being in some cases assembled by adding several components, such as for example by winding an open texture fabric around the joint and thereupon applying a resin filling.

A preinsulated join according to above is disclosed in the patent application US20030127242, which comprises an enclosing metallic screw connector in an adhering insulation jacket extending at both front faces into elastic collars which take cable ends. The insulation jacket is provided with bores for housing of the clamping screws for the electrical and mechanical connection of the cable with the connector. However the main disadvantage of this device reside in the lack of adequate insulation in the conductors once having carried out the connection.

This very applicant is the owner of patents and designs relating to devices and several components thereof for carrying out all types of electric connections, such as joints, branchings and terminations, improving those being known at present. From among the aforementioned and most recent devices and components can be cited the connectors of the Designs ES no. 0501373, 156311, 157750, Community Designs 00061262, 000137278, 000209416, and Patent ES 20060202698; the clamping screws of the Designs ES no. 0501373, Community Designs 0002C9424, 000420690, 000470455, 000494885, 000512025 and Patents ES 200600568, 200600954, 200502820; Insulating system for sealing the cable ends Patent ES no. 200502821.

The aforementioned devices and components for electric connections have led to the obtaining of the preinsulated joint being the object of the present invention and allowing to obviate the aforementioned problems relating to the installation and the sealing of the known joints.

### SUMMARY OF THE INVENTION

The aforementioned drawbacks have been now fully obviated by means of the preinsulated joint being the object of the present invention, which is essentially characterised in that it consists in a compact assembly being already in a position to readily allow to carry out the corresponding electric connections, said compact assembly comprising at least one screw connector, one insulating body being provided with bores for the housing/passage of the connector screws, and with nozzles incorporating the sealing means, clamping screws, and a seal for the adaptation thereof to multipolar cables of different diameters.

The insulating means of the nozzles are made up by at least one insulating seal and one cable centring guide for the adaptation thereof to insulated conductors of different diameters and are characterised in that they maintain the insulation of the conductors once having carried out the connection.

These and other characterising features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In said drawings:

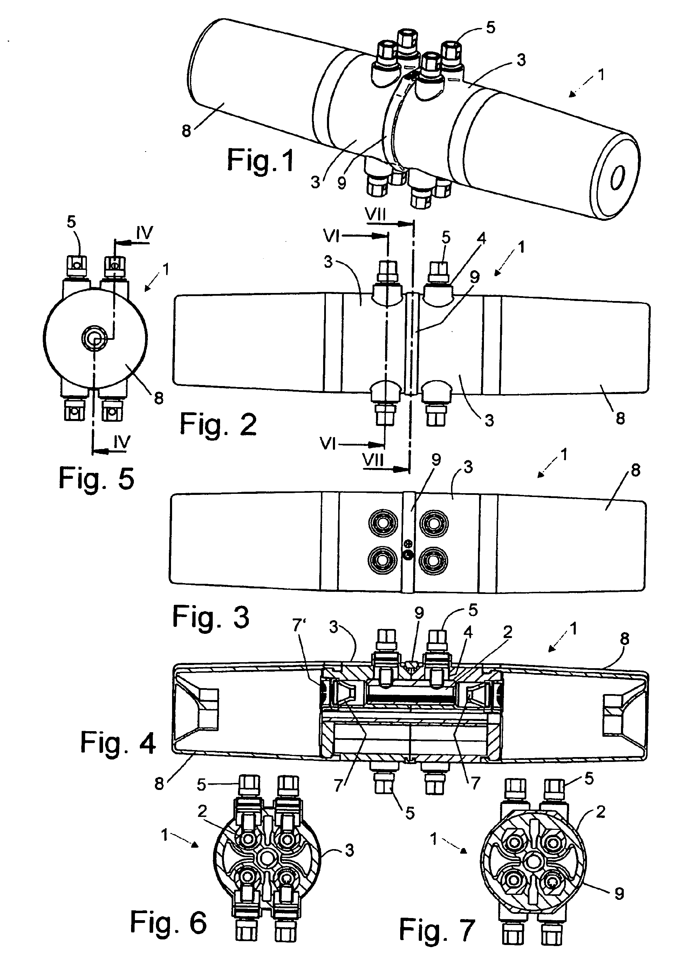

Fig. 1 is a perspective view of the preinsulated joint being the object of the present invention.
Fig. 2 is a side elevational view of the joint.
Fig. 3 is a top plan view of the joint.
Fig. 4 is a longitudinally sectional view of the joint being illustrated in Figs. 1 through 3, as per section line IV-IV in Fig. 5.
Fig. 5 is an end view of the joint.
Fig. 6 is a cross-sectional view as per section line VI-VI in Fig. 2.
Fig. 7 is a cross-sectional view as per section line VII-VII in Fig. 2.

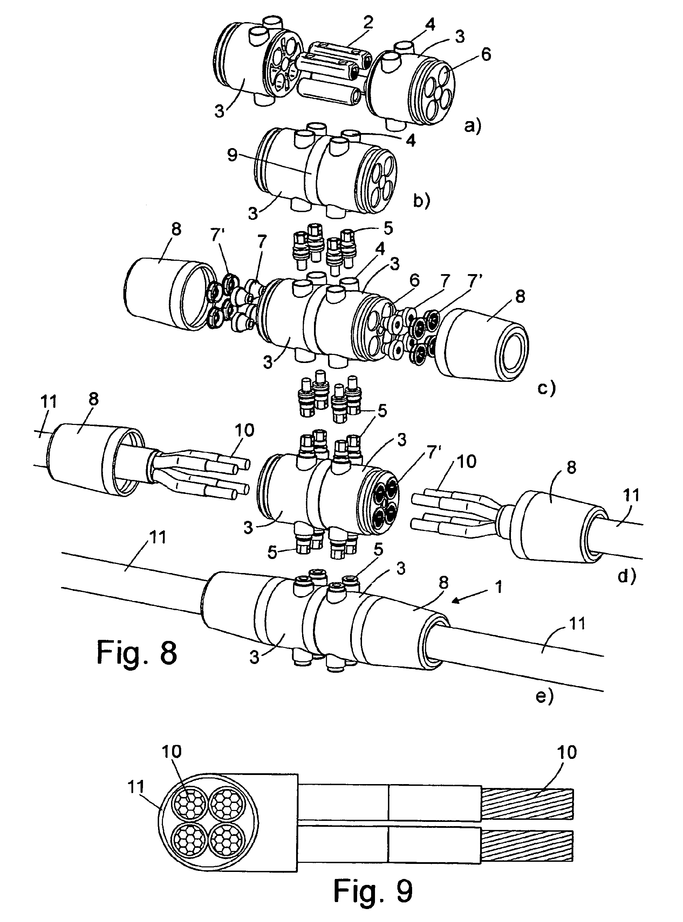

Fig. 8 a, b, c, d, e each correspond to a respective perspective view of the connectors and the insulating body of the preinsulated joint in an exploded arrangement, in an assembled state, in an assembled state with the screws and the insulating means and the seals in an exploded arrangement, in an assembled state with the seals in an exploded arrangement and arranged at each end of the respective cable, and finally of the whole preinsulated joint assembled with cables.
Fig. 9 is a fragmentary view of the cable having four insulated conductors.

### DESCRIPTION OF A PREFERRED EMBODIMENT OF THE INVENTION

According to the drawings, the preinsulated joint being the object of the present invention, and being generally designated at -1-, consists in a compact assembly comprising four screw connectors -2-, two insulating bodies -3- being provided with bores -4- for the housing/passage of the clamping screws -5- of the connectors -2-, and the nozzles -6- being provided with insulating seals -7- incorporating the centring guides - 7'- for the adaptation thereof to insulated conductors - 10- of different diameters, as well as the seals for the adaptation thereof to multipolar cables -11- of different diameters, and the central seal -9- for joining the insulating bodies.

## Claims

1. Preinsulated joint, that consists in a compact assembly and which comprises at least one screw connector; one insulating body being provided with bores for the housing/passage of the clamping screws of the at least one screw connector; and a seal suitable for the adaptation thereof to multipolar cables of different diameters, **characterized in that**
- it comprises a second insulating body (3) being provided with bores (4) for the housing /passage of the clamping screws (5) of the at least one screw connector (2), and a central seal (9) for joining the two insulating bodies (3); and **in that**
- the two insulating bodies (3) comprise nozzles (6) incorporating the sealing means (7,7') for the adaptation thereof to insulated conductors of different diameters.

2. Preinsulated joint according to claim 1 **characterised in that** the insulating means of the nozzles (6) are made up by insulating seals (7) incorporating centring guides (7').

## Patentansprüche

1. Vorisolierte Verbindung, bestehend aus einer kompakten Baugruppe, die mindestens einen Schraubverbinder umfasst sowie einen Isolierkörper, der mit Bohrungen für die Aufnahme/den Durchtritt der Klemmschrauben des mindestens einen Schraubverbinders versehen ist, und eine Dichtung zur Anpassung desselben an mehrpolige Kabel unterschiedlichen Durchmessers, **dadurch gekennzeichnet, dass**
- sie einen zweiten Isolierkörper (3), der mit Bohrungen (4) für die Aufnahme/den Durchtritt der Klemmschrauben (5) des mindestens einen Schraubverbinders (2) versehen ist, und eine Mitteldichtung (9) zur Verbindung der beiden Isolierkörper (3) umfasst; und dass
- die beiden Isolierkörper (3) Anschlussstutzen umfassen, in denen die Dichtungsmittel (7, 7') für die Anpassung an isolierte Leiter unterschiedlichen Durchmessers enthalten sind.

2. Vorisolierte Verbindung nach Anspruch 1, **dadurch gekennzeichnet, dass** die Isoliermittel der Anschlussstutzen (6) aus Isolierdichtungen (7) mit darin enthaltenen Zentrierführungen (7') bestehen.

## Revendications

1. Joint pré-isolé qui consiste dans un assemblage compact comprenant au moins un connecteur à vis ; un corps d'isolation muni de perforations pour loger/faire passer les vis d'attache d'au moins un connecteur à vis ; et un joint approprié pour y adapter les câbles multipolaires de différents diamètres, **caractérisé en ce que**
- il comprend un second corps d'isolation (3) muni de perforations (4) pour loger/faire passer les vis d'attache d'au moins un connecteur à vis (2), et d'un joint d'étanchéité central (9) pour l'union des deux corps d'isolation (3), et **en ce que**
- les deux corps d'isolation (3) comprennent des douilles (6) incorporant des moyens d'étanchéité (7, 7') pour leur adaptation à des conducteurs isolés de différents diamètres.

2. Joint pré-isolé conformément à la revendication 1 **caractérisé en ce que** les moyens d'isolation des douilles (6) sont composés de joints isolants (7) incorporant des guides de centrage (7').
